# EUROPEAN PATENT APPLICATION

(11) **EP 4 773 713 A1**
(43) Date of publication of application: **08.07.2026**
(21) Application number: 23950124.0
(22) Date of filing: 30.08.2023
(51) Int. Cl.: H04W 74/08, H04W 72/50

(54) **METHOD FOR CHANNEL ACCESS AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: RGTH
(86) International application number: PCT/CN2023/115766
(87) International publication number: WO 2025/043534

(57) **Abstract**

Provided are a method for channel access and a communication device. The method comprises: a first device determining first information, the first information being associated with power and/or energy of the first device, and the first information being used to determine a channel access priority level of the first device. Embodiments of the present disclosure determine a channel access priority level of a device on the basis of power and/or energy related information, which helps to reduce the channel access time of a power- and/or energy-limited device.

## Description

### TECHNICAL FIELD

The present disclosure relates to the technical field of communications, and more particularly, to a method for channel access and a communication device.

### BACKGROUND

Some communication systems assign channel access priorities to communication devices based on traffic categories. However, such a method of assigning the channel access priorities may result in certain types of communication devices being unable to access the channel for a long time.

### SUMMARY

The present disclosure provides a method for channel access and a communication device. Various aspects involved in the present disclosure are introduced below.

In a first aspect, a method for channel access is provided, and includes: determining, by a first device, first information, where the first information is associated with power of the first device and/or energy of the first device, and the first information is used to determine a channel access priority of the first device.

In a second aspect, a method for channel access is provided, and includes: determining, by a second device, first information, where the first information is associated with power of a first device and/or energy of the first device, and the first information is used to determine a channel access priority of the first device.

In a third aspect, a communication device is provided. The communication device is a first device and the communication device includes: a determining module configured to determine first information, where the first information is associated with power of the first device and/or energy of the first device, and the first information is used to determine a channel access priority of the first device.

In a fourth aspect, a communication device is provided. The communication device is a second device and the communication device includes: a determining module configured to determine first information, where the first information is associated with power of a first device and/or energy of the first device, and the first information is used to determine a channel access priority of the first device.

In a fifth aspect, a communication device is provided, and includes: a processor and a memory, where the memory is configured to store a computer program, and the processor is configured to call the computer program in the memory to enable the communication device to perform the method in the first aspect or the second aspect.

In a sixth aspect, an apparatus is provided, and includes: a processor configured to call a program from a memory to enable the apparatus to perform the method in the first aspect or the second aspect.

In a seventh aspect, a chip is provided, and includes: a processor configured to call a program from a memory to enable a device equipped with the chip to perform the method in the first aspect or the second aspect.

In an eighth aspect, a computer-readable storage medium is provided, and has stored a program thereon, where the program enables a computer to perform the method in the first aspect or the second aspect.

In a ninth aspect, a computer program product is provided, and includes: a program, where the program enables a computer to perform the method in the first aspect or the second aspect.

In a tenth aspect, a computer program is provided, and the computer program enables a computer to perform the method in the first aspect or the second aspect.

Determining the channel access priority of the device based on the information associated with the power and/or the energy is conducive to reducing the time of accessing the channel by the device with limited power and/or energy.

### BRIEF DESCRIPTION OF THE DRAWINGS

FIG. 1 is a schematic diagram of a wireless communication system to which embodiments of the present disclosure may be applicable.
FIG. 2 is a schematic flowchart of a method for channel access provided in the embodiments of the present disclosure.
FIG. 3 is a schematic structural diagram of a communication device provided in the embodiments of the present disclosure.
FIG. 4 is a schematic structural diagram of another communication device provided in the embodiments of the present disclosure.
FIG. 5 is a schematic structural diagram of an apparatus provided in the embodiments of the present disclosure.

### DETAILED DESCRIPTION

The technical solutions of the present disclosure are described below with reference to the drawings.

### Communication System

The technical solutions of the embodiments of the present disclosure may be applied to various communication systems, such as wireless local area networks (WLANs), wireless fidelity (WiFi), or other communication systems.

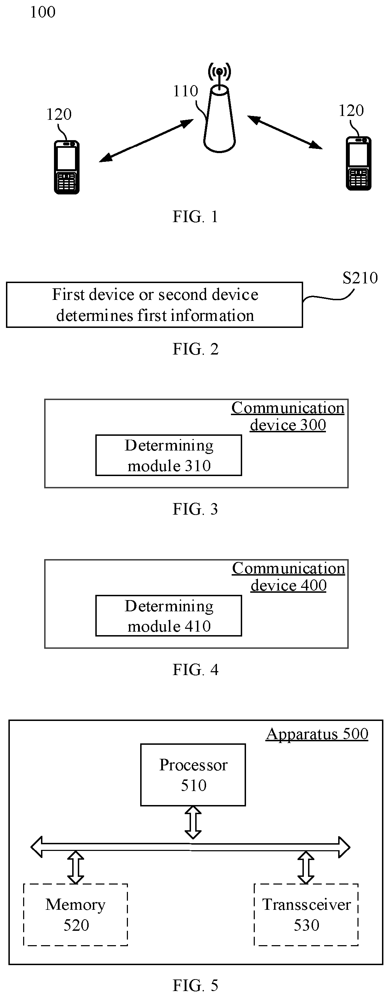

FIG. 1 is a wireless communication system 100 applied in the embodiments of the present disclosure. The wireless communication system 100 may include an access point (AP) 110 and stations (STAs) 120 accessing a network via the access point 110.

In some scenarios, an AP is also referred to as an AP STA, that is, in a sense, the AP is also a type of STA.

In some scenarios, an STA is also referred to as a non-AP STA.

Communication in the communication system 100 may be communication between an AP and an STA, communication between STAs, or communication between an STA and a peer STA, where the peer STA may refer to a device that performs communication with the STA peer to peer. For example, the peer STA may be an AP or an STA.

The AP is equivalent to a bridge connecting a wired network and a wireless network, and the main function of AP is to connect various wireless network clients together and then connect the wireless network to Ethernet. An AP device may be a terminal device (e.g., a mobile phone) with a WiFi chip or a network device (e.g., a router) with a WiFi chip.

It should be understood that a role of the STA in the communication system is not absolute. For example, in some scenarios, when the mobile phone is connected to the router, the mobile phone is a STA; or when the mobile phone serves as a hotspot for other mobile phones, the mobile phone plays a role of an AP.

The AP and the STA may be devices applied in Internet of Vehicles; Internet of things (IoT) nodes and sensors applied in IoT; smart cameras, smart remote controls or smart water and electricity meters applied in smart homes; and sensors applied in smart cities.

In some embodiments, both the STA and the AP may support the 802.11be standard. The STA or the AP may also support various current and future 802.11 family WLAN standards, such as 802.11ax, 802.11ac, 802.11n, 802.11g, 802.11b and 802.11a.

One or more links exist between a station and an access point. In some embodiments, the station and the access point support multi-band communications. For example, communications are simultaneously performed on frequency bands of 2.4 gigahertz (GHz), 5 GHz, 6 GHz, 45 GHz and 60 GHz, or communications are simultaneously performed on different channels within a same frequency band (or different frequency bands), so that throughput and/or reliability in communications between devices may be improved. Such a device is usually referred to as a multi-band device, or a multi-link device (MLD), and in some cases, such the device is also referred to as a multi-link entity or a multi-band entity. The multi-link device may be an access point device or a station device. In a case where the multi-link device is an access point device, the multi-link device includes one or more APs; and in a case where the multi-link device is a station device, the multi-link device includes one or more non-AP STAs.

The multi-link device including one or more APs is referred to as an access point multi-link device (AP MLD), and the multi-link device including one or more non-AP STAs is referred to as a non-AP multi-link device (non-AP MLD).

In the embodiments of the present disclosure, the AP may include multiple APs, and the non-AP may include multiple STAs, multiple links may be formed between the APs in the AP and the STAs in the non-AP, and data communication may be performed between an AP in the AP and a corresponding STA in the non-AP via a corresponding link.

In the embodiments of the present disclosure, the STA may be a mobile phone, a tablet computer (Pad), a notebook computer, a laptop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like that supports the WLAN/WiFi technology.

Frequency bands supported by the WLAN technology may include but are not limited to: a low frequency band (e.g., 2.4 GHz, 5 GHz or 6 GHz) and a high frequency band (e.g., 60 GHz).

FIG. 1 exemplarily illustrates an AP and two STAs. Optionally, the communication system 100 may include multiple APs and STAs of other quantities, which is not limited in the embodiments of the present disclosure.

It should be understood that a device having a communication function in a network/system in the embodiments of the present disclosure may be referred to as a communication device. Taking the communication system 100 illustrated in FIG. 1 as an example, the communication device may include an access point 110 and stations 120 having communication functions, and the access point 110 and the stations 120 may be the specific devices described above, which will not be repeated here. The communication device may further include other devices in the communication system 100, such as network controllers, gateways and other network entities, which are not limited in the embodiments of the present disclosure.

The AP and the STA may be deployed on land, including indoors or outdoors, handheld or vehicle-mounted. Alternatively, the AP and the STA may also be deployed on water. Alternatively, the AP and the STA may also be deployed on an aircraft, a balloon, and a satellite in the air. The scenario in which the AP and the STA are located is not limited in the embodiments of the present disclosure.

It should be understood that all or part of the functions of the communication device in present disclosure may also be implemented through software functions running on hardware, or through virtualization functions instantiated on a platform (e.g., a cloud platform).

### Traffic Category

Some communication systems (e.g., Wi-Fi system) define traffic categories (or service categories). The traffic category may refer to a class or a priority assigned to one or more types of network services. The use of the traffic category helps in managing quality of service (QoS) of different types of network services, thereby providing differentiated treatment to different types of data. Some protocols (e.g., 802.11) define four types of traffic categories. The four types of traffic categories are also referred to as four access categories (ACs), including AC-VO, AC-VI, AC_BE, and AC_BK, where VO stands for voice, VI stands for video, BE stands for best effort, and BK stands for background. By defining the above traffic categories, the communication system may provide differentiated treatment to different services based on service requirements, thereby helping in optimizing the network performance, ensuring the QoS requirements of different services, and accommodating different types of applications and scenarios.

Different traffic categories may represent different service priorities. In general, a service with a high priority may access a channel fast, so that the QoS requirements may be guaranteed. However, a channel access method based on the traffic categories may lead to unreasonable results in some scenarios (e.g., a scenario in which the energy consumption is of great concern).

For example, many ambient power (AMP) devices have features of battery free, ultra-low complexity, and maintaining a relatively long life cycle without maintenance. These features determine that energy or power of many AMP devices is extremely limited. That is, many AMP devices may not have strong energy harvesting capabilities and/or energy storage capabilities. During channel access, a communication device usually continuously monitor the channel based on the principle of listen before talk (LBT). Upon the channel is idle, the communication device may access the channel to transmit a signal. A device with a higher channel access priority has a higher channel access success rate than other devices. The traffic category of an AMP device may belong to a traffic category with a low priority. In this case, a low channel access priority may be assigned to the AMP device. When the AMP device fails to access the channel for a long time, the energy stored in the AMP device will be drained quickly in the channel monitoring process. After the energy is drained completely, the AMP device needs to re-enter a sleep state and performs energy harvesting again until there is enough energy to perform the channel access procedure again. The above process results in a large latency. The latency issue may not even be the critical issue faced by the APM device, and the more critical issue may be whether the channel access caused by the latency is fair.

For the above issues, the embodiments of the present disclosure are introduced below.

FIG. 2 is a schematic flowchart of a method for channel access provided in the embodiments of the present disclosure. The method in FIG. 2 may be performed by a first device or a second device.

In some implementations, the first device is a station. For example, the first device may be the station 120 illustrated in FIG. 1.

In some implementations, the first device is an AMP device.

In some implementations, the second device is an AP. For example, the first device may be the access point 110 illustrated in FIG. 1.

Referring to FIG. 2, in step S210, the first device or the second device determines first information. The first information is associated with power of the first device and/or energy of the first device, and the first information is used to indicate or determine a channel access priority of the first device.

Determining the channel access priority based on information related to the power and/or the energy helps in reducing a latency of channel access for some devices and improving the fairness of channel access. Taking AMP devices as an example, different AMP devices may have different energy harvesting capabilities and/or energy storage capabilities. Considering status of the energy and/or power of the AMP devices and assigning different channel access priorities to the AMP devices with different capabilities may help in reducing the latency of channel access for the AMP devices, and improving the fairness of channel access for the AMP devices.

In some implementations, the first information being associated with the power of the first device and/or the energy of the first device may include that the first information is associated with a power feature and/or an energy feature of the first device.

In some implementations, the first information being associated with the power of the first device and/or the energy of the first device may include that the first information is determined based on the power of the first device and/or the energy of the first device.

In some implementations, the first information being associated with the power of the first device and/or the energy of the first device may include that the first information is used to indicate the power feature of the first device and/or the energy feature of the first device.

In some implementations, the first information being associated with the power of the first device and/or the energy of the first device may include that the first information is associated with an energy harvesting capability of the first device. For example, the first information is determined based on the energy harvesting capability of the first device; alternatively, the first information may indicate the energy harvesting capability of the first device.

In some implementations, the first information being associated with the power of the first device and/or the energy of the first device may include that the first information is associated with an energy storage capability (or referred to as a power storage capability) of the first device. For example, the first information is determined based on the energy storage capability of the first device; alternatively, the first information may indicate the energy storage capability of the first device.

In some implementations, the first information includes a first category. The first category is a category of one or more categories that are preset or configured, and the one or more categories are associated with the power of the first device and/or the energy of the first device.

In some implementations, the one or more categories may be referred to as a power category (PC). The PC may include one or more specific categories, and the above-mentioned first category may be a category of the one or more specific categories.

The manner of defining the specific categories in the PC is not limited in the embodiments of the present disclosure, and the specific categories may be predefined by a protocol or configured by a network device (e.g., an access point).

As an example, the PC may include PC0 to PC2. PC0 may indicate that a device has an extremely limited energy harvesting capability and/or power storage capability; PC1 may indicate that a device has a limited energy harvesting capability and/or power storage capability; and PC2 may indicate that a device has a reasonable energy harvesting capability and/or power storage capability.

It should be understood that the above-mentioned manner of defining the PC is only an example. In other implementations, the PC may include more categories (e.g., PC0 to PC3) or fewer categories (e.g., PC0 and PC1) than the above-mentioned three categories. In addition, the meaning of each category in the PC may also be adjusted according to actual needs.

In some implementations, the one or more categories correspond to one or more channel access priorities. The mapping relationship between the one or more categories and the one or more channel access priorities may be a one-to-one mapping manner, or may include a one-to-many mapping manner or a many-to-one mapping manner. As an example, different categories in the one or more categories correspond to different channel access priorities. Taking the above-mentioned PC0 to PC2 as an example, a higher channel access priority may be configured to a PC with a smaller index. For example, a channel access priority corresponding to the PC0 is higher than a channel access priority corresponding to the PC1, and the channel access priority corresponding to the PC1 is higher than a channel access priority corresponding to the PC2. Certainly, the embodiments of the present disclosure are not limited to above, and in other implementations, a higher channel access priority may be configured to a PC with a greater index.

For example, the first device is an AMP device. The AMP devices usually have the limited energy harvesting capabilities and/or energy storage capabilities, and therefore, a high channel access priority may be set for the AMP device, especially setting a high channel access priority for a device in AMP devices that has an extremely low energy harvesting capability and/or energy storage capability. This is because if such devices have low channel access priorities, their energy will be drained quickly. Once the energy of the devices is drained completely, such devices may need to restore enough energy to initiate the channel access procedure again, which may result in the devices taking a long time to access the channel.

In some implementations, the first category may be determined based on second information. That is, which one of the above-mentioned one or more categories to which the first category belongs may be determined based on the second information. Taking the PC as an example, which one of the PC0, the PC1 and the PC2 to which the PC of the first device belongs may be determined based on the second information.

In some implementations, the second information may be associated with the power of the first device and/or the energy of the first device. For example, the second information may include one or more features of the first device in terms of the power or the energy.

In some implementations, the second information may include third information. The third information may be associated with an energy harvesting capability of the first device. Alternatively, the third information may be used to indicate or determine the energy harvesting capability of the first device. For example, the stronger the energy harvesting capability of the first device is, the lower the channel access priority corresponding to the first category may be. Taking the above-mentioned PC0 to PC2 as an example, the first category may be set to a PC with a great index among the PC0 to PC2 (the greater the index of the PC, the lower the channel access priority).

In some implementations, the second information may include fourth information. The fourth information may be associated with an energy storage capability of the first device. Alternatively, the fourth information may be used to indicate or determine the energy storage capability of the first device. For example, the stronger the energy storage capability of the first device is, the lower the channel access priority corresponding to the first category may be. Taking the above-mentioned PC0 to PC2 as an example, the first category may be set to a PC with a great index among the PC0 to PC2 (the greater the index of the PC, the lower the channel access priority).

In some implementations, the second information may include fifth information. The fifth information may be associated with an energy harvesting mode of the first device. Alternatively, the fifth information may be used to indicate or determine the energy harvesting mode of the first device. For example, the more diverse the energy harvesting modes of the first device are, the lower the channel access priority corresponding to the first category may be. Taking the above-mentioned PC0 to PC2 as an example, the first category may be set to a PC with a great index among the PC0 to PC2 (the greater the index of the PC, the lower the channel access priority).

In some implementations, the second information may include sixth information. The sixth information may be associated with an energy harvesting frequency of the first device. Alternatively, the sixth information may be used to indicate or determine the energy harvesting frequency of the first device. For example, the higher the energy harvesting frequency of the first device is, the lower the channel access priority corresponding to the first category may be. Taking the above-mentioned PC0 to PC2 as an example, the first category may be set to a PC with a great index among the PC0 to PC2 (the greater the index of the PC, the lower the channel access priority).

The third to sixth information are described below with more specific examples.

In some implementations, the third information may include seventh information and/or eighth information. The seventh information may be associated with a power source of the first device. Or in other words, the seventh information may be used to indicate or determine the power source of the first device. The eighth information may be associated with energy harvesting efficiency of the first device. Or in other words, the eighth information may be used to indicate or determine the energy harvesting efficiency of the first device.

For example, the seventh information may be used to indicate whether multiple types of power sources are supported by the first device. The multiple types of power sources may include, for example, one or more of: a radio frequency (RF) power source, solar power, or a vibration power source. As a specific example, in a case where the first device supports the multiple types of power sources (i.e., may be supplied with power through the multiple types of power sources), it may mean that the first device has a relatively strong energy harvesting capability, and in this case, the above-mentioned first category may be a category with a relatively low priority among the one or more categories that are preset. In a case where the first device only supports one type of power source (i.e., may only be supplied with power through one type of power source), it may mean that the first device has a relatively weak energy harvesting capability, and in this case, the above-mentioned first category may be a category with a relatively high priority among the one or more categories that are preset.

As another example, the seventh information may be used to indicate whether the RF power source is supported by the first device. As a specific example, in a case where the first device supports the RF power source, it may mean that the first device has a relatively strong energy harvesting capability (since the RF power source is a power source that is easily obtained), and in this case, the above-mentioned first category may be a category with a relatively low priority among the one or more categories that are preset. In a case where the first device does not support the RF power source, it may mean that the first device has a relatively weak energy harvesting capability, and in this case, the above-mentioned first category may be a category with a relatively high priority among the one or more categories that are preset.

As another example, the seventh information may be used to indicate whether the power source of the first device is stable. As a specific example, in a case where the power source of the first device is stable, it may mean that the first device has a relatively strong energy harvesting capability, and in this case, the above-mentioned first category may be a category with a relatively low priority among the one or more categories that are preset. In a case where the power source of the first device is unstable, it may mean that the first device has a relatively weak energy harvesting capability, and in this case, the above-mentioned first category may be a category with a relatively high priority among the one or more categories that are preset.

In some implementations, the fourth information may include ninth information. The ninth information may be used to indicate whether energy storage is supported by the first device. As a specific example, in a case where the first device supports the energy storage, it may mean that the first device has a relatively strong energy storage capability, and in this case, the above-mentioned first category may be a category with a relatively low priority among the one or more categories that are preset. In a case where the first device does not support the energy storage, it may mean that the first device has a relatively weak energy storage capability, and in this case, the above-mentioned first category may be a category with a relatively high priority among the one or more categories that are preset.

In some implementations, the fourth information may include tenth information. The tenth information may be used to indicate an amount of stored energy of the first device. As a specific example, the greater the amount of the stored energy of the first device is, the lower the channel access priority corresponding to the first category may be; on the contrary, the smaller the amount of the stored energy of the first device is, the higher the channel access priority corresponding to the first category may be.

In some implementations, the fourth information may include eleventh information. The eleventh information may be used to indicate an energy draining rate (or referred to as energy storage draining rate) of the first device. As a specific example, the lower the energy draining rate of the first device is, the lower the channel access priority corresponding to the first category may be; on the contrary, the higher the energy draining rate of the first device is, the higher the channel access priority corresponding to the first category may be.

In some implementations, the fifth information may be used to indicate whether an energy harvesting mode jointing multiple power sources is supported by the first device. The energy harvesting mode jointing multiple power sources may also be referred to as a joint multiple nodes energy harvesting mode, which refers to that the first device may receive power from the multiple power sources at the same time. As an example, in a case where the energy harvesting mode jointing multiple power sources is supported by the first device, the first category may correspond to a relatively low channel access priority.

In some implementations, the sixth information may be used to indicate whether energy harvesting in multiple frequency bands (e.g., multiple RF frequency bands) is supported by the first device. As an example, in a case where the first device supports performing energy harvesting in the multiple frequency bands, the first category may correspond to a relatively low channel access priority. Taking an example in which the multiple frequency bands include a frequency band lower than 1GHz (sub 1 GHz (S1G) and a frequency band of 2.4 GHz, in a case where the first device supports performing the energy harvesting in both the S1G and the 2.4 GHz frequency bands, the first category may correspond to a relatively low channel access priority.

In some implementations, the sixth information may be used to indicate whether energy harvesting in a target frequency band is supported by the first device. The target frequency band may refer to a frequency band with no or less limit on a transmit power of the communication device. For example, the S1G frequency band has a low limit on the transmit power of RF energy harvesting, so that the target frequency band may be the S1G frequency band. As a specific example, in a case where the first device supports performing energy harvesting in the target frequency band, the first category may correspond to a relatively low channel access priority. This is since the target frequency band has no power limit or has less power limit, so that the first device may receive a large amount of energy within a very short time.

The manner of configuring the first category is described in detail below.

In some implementations, the first category may be determined based on pre-configuration information. For example, the first category may be configured in a memory inside the first device when the first device leaves the factory.

In some implementations, the first category may be determined based on configuration information from a second device. The second device mentioned here may be an access point (AP). For example, the first device may transmit the above-mentioned second information (e.g., information related to features of the power and/or the energy of the first device) to the second device, and the second device may determine the first category based on the second information.

In some implementations, the first category corresponding to the first device may be a fixed category. The fixed category may refer to a category that remains unchanged after being configured. For example, the first category may be configured in the memory inside the first device when the first device leaves the factory, and during subsequent use of the first device, the channel access is always performed based on the first category stored in the memory. As another example, the first device may receive the configuration information from the second device (e.g., AP), and the configuration information may be used to configure a category of the first device to be the first category (the first category may be configured based on the second information mentioned above). After the second device configures the first category to the first device, the first device may always perform the channel access based on the first category. Setting the first category as a fixed category helps in reducing signaling overhead.

In some implementations, the first category corresponding to the first device may be a dynamically determined category. The dynamically determined category may refer to that the category of the first device may be adjusted depending on actual conditions.

For example, the first category may be dynamically determined based on information related to a channel access failure. Taking the PC as an example, an initial PC of the first device is the PC2, and when the first device fails to access the channel, the PC of the first device may be adjusted to the PC1, so that the first device has a higher channel access priority, so as to reduce a probability of getting into a sleep state by the first device before accessing the channel.

As another example, the first category may be dynamically determined based on harvesting circumstance of the power source (or non-RF power source) of the first device. Taking the PC as an example, assuming that the power source of the first device is the solar power, a PC with a greater index (lower channel access priority) may be configured to the first device during the daytime since the first device has a higher energy harvesting efficiency during the daytime. On the contrary, a PC with a smaller index (higher channel access priority) may be configured to the first device during night since the first device has a lower energy harvesting efficiency during night.

The information interaction process related to the PC between the first device and the second device (e.g., the AP) is described in detail below. It should be understood that the information interaction process described below is not necessary. In a case where the first device autonomously accesses the channel, it is not necessary to perform information interaction related to the PC with the second device.

In some implementations, the method in FIG. 2 may further include: the first device transmitting the first category to the second device. The process of transmitting the first category by the first device to the second device may be referred to as a process of reporting the first category (e.g., a reporting process of the PC).

In some implementations, transmission of the first category may be actively triggered by the first device. For example, the active triggering process may occur in an initial stage, such as an association stage or an authentication stage, of establishing a connection between the first device and the second device. Alternatively, the active triggering process may also occur in a normal data frame transmission phase.

In some implementations, transmission of the first category may be triggered based on a request from the second device. For example, the request-based triggering process may occur in an initial stage, such as an association stage or an authentication stage, of establishing a connection between the first device and the second device. Alternatively, the request-based triggering process may also occur in a normal data frame transmission phase.

In some implementations, the first device receives the first category transmitted by the second device. That is, the first category may be determined by the second device and transmitted to the first device. Before the first device receives the first category transmitted by the second device, the first device may transmit the above-mentioned second information (e.g., information related to the features of the power and/or the energy of the first device) to the second device, and the second information may be used by the second device to determine the first category. For example, the first device may transmit information such as power source(s) and capacitor storage capability of the first device to the second device; and the second device may transmit the first category to the first device after determining the first category based on the second information.

It should be noted that the above implementations may be independent of each other or combined with each other. For example, the first device may first transmit the first category to the second device, and then the first device may receive a second category transmitted by the second device. The first category is an initial category determined by the first device itself, and the second category is a category adjusted by the second device. Taking the PC as an example, the first category may be the PC1 and the second category may be the PC2.

It should also be noted that whether the second device needs to transmit the first category to the first device may be determined based on an initiator of the channel access. For example, when the channel access procedure is initiated by the first device, the second device needs to transmit the first category to the first device, since the first device needs to obtain its own channel access priority based on the first category, so as to perform the channel access based on the channel access priority. As another example, when the channel access procedure is initiated or controlled by the second device, the second device may not transmit the first category to the first device, since the entire channel access procedure will be performed under the control of the second device.

In some implementations, the above-mentioned first category or channel access priority may correspond to one or more of the following parameters: a contention window (CW), a slot time, an arbitration inter frame space (AIFS), a maximum value of the contention window (CWmin), or a maximum value of the contention window (CWmax).

Among the above-mentioned parameters, the contention window may be used by the device(s) to select random backoff value(s) before attempting to perform transmission. Generally, the higher the channel access priority, the shorter the contention window. The slot time refers to the duration of a slot, and the slot time is a basic time unit for the channel access. The AIFS refers to a period of time for which a device needs to wait after the medium becomes idle, that is, transmission may be started after the period of time. The CWmin and the CWmax refer to a minimum size and a maximum size of a contention window corresponding to each access category, respectively, and similar to a contention window of a distributed coordination function (DCF), these parameters may be used to determine a range of the backoff values.

In some implementations, when the channel access is initiated by the first device, the first device may transmit the first category to the second device. The second device may configure the channel access priority and related parameters (e.g., the above-mentioned CW or other parameters) based on the first category.

In some implementations, when the channel access is initiated by the first device, the first device may map the first category to a default channel access priority. In this case, the first device may not transmit the first category to the second device, that is, the second device does not need to configure the related parameters of the channel access.

In some implementations, when the channel access is controlled by the second device, the first device may transmit the first category to the second device. The second device may adjust the first category and configure the channel access priority and the related parameters (e.g., the above-mentioned CW or other parameters).

As mentioned above, the first information may be determined based on the second information. Optionally, the first information may include the second information.

It is mentioned in FIG. 2 that the second device may also determine the first information. The second device determining the first information may include that the second device receives the first information from the first device; or the second device receives the second information from the first device and determines the first information based on the second information.

It should be noted that on a premise of no conflict, the meanings of the power and the energy mentioned in any of the above embodiments are basically the same, and the two terms may be used interchangeably. For example, the above-mentioned energy storage capability may be replaced with the power storage capability.

The method embodiments of the present disclosure are described in detail above, and the apparatus embodiments of the present disclosure are described in detail below. It should be understood that the description of the method embodiments corresponds to the description of the apparatus embodiments, and therefore, for parts that are not described in detail, reference may be made to the previous method embodiments.

FIG. 3 is a schematic structural diagram of a communication device provided in an embodiment of the present disclosure. The communication device 300 illustrated in FIG. 3 may be the above-mentioned first device. The communication device 300 may include a determining module 310.

The determining module 310 may be configured to determine first information, where the first information is associated with power of the first device and/or energy of the first device, and the first information is used to determine a channel access priority of the first device.

In some implementations, the first information is associated with an energy harvesting capability and/or an energy storage capability of the first device.

In some implementations, the first information includes a first category, the first category is a category of one or more categories that are preset, and the one or more categories are associated with the power and/or the energy.

In some implementations, the one or more categories correspond to one or more channel access priorities.

In some implementations, the first category is determined based on second information, and the second information is associated with the power of the first device and/or the energy of the first device.

In some implementations, the second information includes one or more of: third information associated with an energy harvesting capability of the first device; fourth information associated with an energy storage capability of the first device; fifth information associated with an energy harvesting mode of the first device; or sixth information associated with an energy harvesting frequency of the first device.

In some implementations, the third information includes one or more pieces of following information: seventh information associated with a power source; or eighth information associated with energy harvesting efficiency.

In some implementations, the seventh information is used to indicate one or more of: whether a plurality of types of power sources are supported; whether a radio frequency power source is supported; or whether a power source is stable.

In some implementations, the fourth information includes one or more of: ninth information indicating whether energy storage is supported; tenth information indicating an amount of stored energy; or eleventh information indicating an energy draining rate.

In some implementations, the fifth information is used to indicate whether an energy harvesting mode jointing a plurality of power resources is supported.

In some implementations, the sixth information is used to indicate one of: whether energy harvesting in a plurality of frequency bands is supported; and whether energy harvesting in a frequency band below 1 GHz is supported.

In some implementations, the first category is determined based on one or more of: pre-configuration information; or configuration information from a second device.

In some implementations, in a case where the first category is determined based on the configuration information from the second device, the communication device further includes: a first communication module configured to transmit second information to the second device, where the second information is associated with the power of the first device and/or the energy of the first device, and the second information is used to determine the first category.

In some implementations, the first category is a fixed category or a dynamically determined category.

In some implementations, the first category is determined based on one or more pieces of following information: information related to a channel access failure; or harvesting circumstance of a power source of the first device.

In some implementations, the communication device 300 further includes: a second communication module configured to transmit the first category to the second device.

In some implementations, transmission of the first category is triggered actively by the first device or is triggered based on a request from the second device.

In some implementations, the communication device 300 further include: a third communication module configured to receive a second category transmitted by the second device after the first device transmits the first category to the second device; where the second category is a category of the one or more categories, and the second category is same as or different from the first category.

In some implementations, the determining module 310 is configured to receive the first category transmitted by a second device.

In some implementations, the second device is an access point device.

In some implementations, the first device is a station.

FIG. 4 is a schematic structural diagram of a communication device provided in an embodiment of the present disclosure. The communication device 400 illustrated in FIG. 4 may be the above-mentioned second device. The communication device 400 may include a determining module 410.

The determining module 410 may be configured to determine first information. The first information is associated with power of a first device and/or energy of the first device, and the first information is used to determine a channel access priority of the first device.

In some implementations, the first information is associated with an energy harvesting capability and/or an energy storage capability of the first device.

In some implementations, the first information includes a first category, the first category is a category of one or more categories that are preset, and the one or more categories are associated with the power and/or the energy.

In some implementations, the one or more categories correspond to one or more channel access priorities.

In some implementations, the first category is determined based on second information, and the second information is associated with the power of the first device and/or the energy of the first device.

In some implementations, the second information includes one or more of: third information associated with an energy harvesting capability of the first device; fourth information associated with an energy storage capability of the first device; fifth information associated with an energy harvesting mode of the first device; or sixth information associated with an energy harvesting frequency of the first device.

In some implementations, the third information includes one or more pieces of following information: seventh information associated with a power source; or eighth information associated with energy harvesting efficiency.

In some implementations, the seventh information is used to indicate one or more of: whether a plurality of types of power sources are supported; whether a radio frequency power source is supported; or whether a power source is stable.

In some implementations, the fourth information includes one or more of: ninth information indicating whether energy storage is supported; tenth information indicating an amount of stored energy; or eleventh information indicating an energy draining rate.

In some implementations, the fifth information is used to indicate whether an energy harvesting mode jointing a plurality of power resources is supported.

In some implementations, the sixth information is used to indicate one of: whether energy harvesting in a plurality of frequency bands is supported; and whether energy harvesting in a frequency band below 1 GHz is supported.

In some implementations, the first category is determined based on one or more of: pre-configuration information; or configuration information from the second device.

In some implementations, in a case where the first category is determined based on the configuration information from the second device, the communication device 400 further includes: a first communication module configured to receive second information transmitted by the first device, where the second information is associated with the power of the first device and/or the energy of the first device, and the second information is used to determine the first category.

In some implementations, the first category is a fixed category or a dynamically determined category.

In some implementations, the first category is determined based on one or more pieces of following information: information related to a channel access failure; or harvesting circumstance of a power source of the first device.

In some implementations, the determining module 410 is configured to receive the first category transmitted by the first device.

In some implementations, transmission of the first category is triggered actively by the first device or is triggered based on a request from the second device.

In some implementations, the communication device 400 further includes: a second communication module configured to transmit a second category to the first device after the second device receives the first category transmitted by the first device; where the second category is a category of the one or more categories, and the second category is same as or different from the first category.

In some implementations, the communication device 400 further includes: a third communication module configured to transmit the first category to the second device.

In some implementations, the first device is a station and the second device is an access point device.

FIG. 5 is a schematic structural diagram of an apparatus for communications in the embodiments of the present disclosure. The dashed lines in FIG. 5 indicate that units or modules are optional. The apparatus 500 may be configured to implement the method(s) described in the above method embodiments. The apparatus 500 may be a chip, a terminal device or a network device.

The apparatus 500 may include one or more processors 510. The processor 510 may support the apparatus 500 to implement the method(s) described in the above method embodiments. The processor 510 may be a general-purpose processor or a dedicated-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic devices, a discrete gate or transistor logic device, a discrete hardware component, etc. The general-purpose processor may be a microprocessor, or the processor may also be any conventional processor or the like.

The apparatus 500 may further include one or more memories 520. The memory 520 stores a program thereon, and the program may be executed by the processor 510 to enable the processor 510 to perform the method(s) described in the above method embodiments. The memory 520 may be independent of the processor 510 or may be integrated into the processor 510.

The apparatus 500 may further include a transceiver 530. The processor 510 may communicate with other devices or chips via the transceiver 530. For example, the processor 510 may transmit and receive data with other devices or chips via the transceiver 530.

The embodiments of the present disclosure further provide a computer-readable storage medium for storing a program. The computer-readable storage medium may be applied to the communication device provided in the embodiments of the present disclosure, and the program enables a computer to perform the method(s) performed by the communication device in various embodiments of the present disclosure.

The embodiments of the present disclosure further provide a computer program product. The computer program product includes a program. The computer program product may be applied to the communication device provided in the embodiments of the present disclosure, and the program enables a computer to perform the method(s) performed by the communication device in various embodiments of the present disclosure.

The embodiments of the present disclosure further provide a computer program. The computer program may be applied to the communication device provided in the embodiments of the present disclosure, and the computer program enables a computer to perform the method(s) performed by the communication device in various embodiments of the present disclosure.

It should be understood that the terms "system" and "network" in the present disclosure may be used interchangeably. Furthermore, the terms used in the present disclosure are only used to explain the specific embodiments of the present disclosure, but are not intended to limit the present disclosure. The terms "first", "second", "third", "fourth" and the like in the specification, claims and drawings of the present disclosure are used to distinguish different objects, rather than to describe a specific order. In addition, the terms "include/comprise" and "has/have" and any variations thereof are intended to cover the non-exclusive inclusion.

In the embodiments of the present disclosure, the "indicate/indicated/indicating/indication" mentioned may be a direct indication, an indirect indication, or an associated relationship. For example, A indicating B may mean that A directly indicates B (e.g., B may be obtained by A); alternatively, A indicating B may mean that A indirectly indicates B (e.g., A indicates C, and B may be obtained by C); alternatively, A indicating B may mean that there is an associated relationship between A and B.

In the embodiments of the present disclosure, "B corresponding to A" means that B is associated with A, and B may be determined based on A. However, it should also be understood that determining B based on A does not mean determining B based on A only, and B may be determined based on A and/or other information

In the embodiments of the present disclosure, the term "correspond/corresponding/correspondence" may indicate a direct correspondence or an indirect correspondence between two items, or may mean that there is an associated relationship between the two items, or may mean a relationship of indicating and being indicated, or a relationship of configuring and being configured, or the like.

In the embodiments of the present disclosure, the term "predefined/predefinition" or "pre-configured/pre-configuration" may be implemented by pre-saving corresponding codes, tables or other manners that may be used to indicate related information in a device (e.g., including the terminal device and the network device), and the specific implementation is not limited in the present disclosure. For example, the term predefined/predefinition may refer to what is defined in a protocol.

In the embodiments of the present disclosure, the term "and/or" is only an associated relationship for describing associated objects, which indicates that there may be three kinds of relationships. For example, "A and/or B" may represent three cases where: A exists alone, both A and B exist, and B exists alone. In addition, a character "/" herein generally indicates that the associated objects before and after this character are in an "or" relationship.

In the embodiments of the present disclosure, the term "include/comprise" may refer to a direct including/comprising, or may refer to an indirect including/comprising. Optionally, the "include" involved in the embodiments of the present disclosure may be replaced with "indicate" or "used to determine". For example, A including B may be replaced with A indicating B or A being used to determine B.

In various embodiments of the present disclosure, values of serial numbers of the aforementioned processes do not mean an execution order. The execution order of each process should be determined by its function and internal logic, and should not impose any limitation on the implementation process of the embodiments of the present disclosure.

In the embodiments of the present disclosure, the term "protocol" may refer to a standard protocol in the field of communications. For example, the "protocol" may include a WiFi protocol and a related protocol used in a future WiFi communication system, which is not limited in present disclosure.

It should be understood that the disclosed systems, apparatuses and methods in several embodiments provided in the present disclosure may be implemented in other modes. For example, the apparatus embodiments described above are merely exemplary. For example, a division of units is merely a division based on logical functions, and other divisions exist in actual implementations. For example, multiple units or components may be combined or integrated into another system, or some features may be omitted or not performed. In addition, coupling or direct coupling or communicative connection as shown or discussed may be indirect coupling or communicative connection of apparatuses or units via some interfaces, which may be electrical, mechanical, or in other forms.

The units illustrated as separate components may be or may not be physically separated, and the components shown as units may be or may not be physical units. That is, they may be located in one place, or may be distributed onto multiple network units. A part or all of the units may be selected depending on actual needs to implement the purpose of the schemes of the embodiments.

In addition, various functional units in the various embodiments of the present disclosure may be integrated into one processing unit, or the various units may exist physically separately, or two or more units may be integrated into one unit.

All or part of the above embodiments may be implemented by software, hardware, firmware or any combination thereof. When implemented by software, all or part of the embodiments may be implemented in a form of a computer program product. The computer program product includes one or more computer instructions. When the computer program instructions are loaded and executed by a computer, all or part of procedures or functions described according to the embodiments of the present disclosure are generated. The computer may be a general-purpose computer, a dedicated-purpose computer, a computer network, or other programmable apparatuses. The computer instructions may be stored in a computer-readable storage medium, or transmitted from a computer-readable storage medium to another computer-readable storage medium. For example, the computer instructions may be transmitted from a website, a computer, a server or a data center to another website, another computer, another server or another data center via a wired mode (e.g., a coaxial cable, optical fiber or a digital subscriber line (DSL)) or a wireless mode (e.g., infrared, radio or microwave). The computer-readable storage medium may be any available medium accessible by a computer, or a data storage device, such as a server or a data center, integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), or the like.

The above content is only specific implementations of the present disclosure, but the protection scope of the present disclosure is not limited thereto. Changes or replacements that any person skilled in the art could readily conceive of within the technical scope disclosed in the present disclosure shall be included in the protection scope of the present disclosure. Therefore, the protection scope of the present disclosure should be subject to the protection scope of the claims.

## Claims

1. A method for channel access, comprising:
determining, by a first device, first information, wherein the first information is associated with power of the first device and/or energy of the first device, and the first information is used to determine a channel access priority of the first device.

2. The method according to claim 1, wherein the first information is associated with an energy harvesting capability and/or an energy storage capability of the first device.

3. The method according to claim 1 or 2, wherein the first information comprises a first category, the first category is a category of one or more categories that are preset, and the one or more categories are associated with the power and/or the energy.

4. The method according to claim 3, wherein the one or more categories correspond to one or more channel access priorities.

5. The method according to claim 3 or 4, wherein the first category is determined based on second information, and the second information is associated with the power of the first device and/or the energy of the first device.

6. The method according to claim 5, wherein the second information comprises one or more of:
third information, associated with an energy harvesting capability of the first device;
fourth information, associated with an energy storage capability of the first device;
fifth information, associated with an energy harvesting mode of the first device; or
sixth information, associated with an energy harvesting frequency of the first device.

7. The method according to claim 6, wherein the third information comprises one or more pieces of following information:
seventh information, associated with a power source; or
eighth information, associated with energy harvesting efficiency.

8. The method according to claim 7, wherein the seventh information is used to indicate one or more of:
whether a plurality of types of power sources are supported;
whether a radio frequency power source is supported; or
whether a power source is stable.

9. The method according to any one of claims 6 to 8, wherein the fourth information comprises one or more of:
ninth information, indicating whether energy storage is supported;
tenth information, indicating an amount of stored energy; or
eleventh information, indicating an energy draining rate.

10. The method according to any one of claims 6 to 9, wherein the fifth information is used to indicate whether an energy harvesting mode jointing a plurality of power resources is supported.

11. The method according to any one of claims 6 to 10, wherein the sixth information is used to indicate one of:
whether energy harvesting in a plurality of frequency bands is supported; and
whether energy harvesting in a frequency band below 1 GHz is supported.

12. The method according to any one of claims 3 to 11, wherein the first category is determined based on one or more of:
pre-configuration information; or
configuration information from a second device.

13. The method according to claim 12, wherein in a case where the first category is determined based on the configuration information from the second device, the method further comprises:
transmitting, by the first device, second information to the second device, wherein the second information is associated with the power of the first device and/or the energy of the first device, and the second information is used to determine the first category.

14. The method according to any one of claims 3 to 13, wherein the first category is a fixed category or a dynamically determined category.

15. The method according to any one of claims 3 to 14, wherein the first category is determined based on one or more pieces of following information:
information related to a channel access failure; or
harvesting circumstance of a power source of the first device.

16. The method according to any one of claims 3 to 15, further comprising:
transmitting, by the first device, the first category to a second device.

17. The method according to claim 16, wherein transmission of the first category is triggered actively by the first device or is triggered based on a request from the second device.

18. The method according to claim 16 or 17, wherein after the first device transmits the first category to the second device, the method further comprises:
receiving, by the first device, a second category transmitted by the second device, wherein the second category is a category of the one or more categories, and the second category is same as or different from the first category.

19. The method according to any one of claims 3 to 15, wherein determining, by the first device, the first information comprises:
receiving, by the first device, the first category transmitted by a second device.

20. The method according to any one of claims 12 to 13 and 16 to 19, wherein the second device is an access point device.

21. The method according to any one of claims 1 to 20, wherein the first device is a station.

22. A method for channel access, comprising:
determining, by a second device, first information, wherein the first information is associated with power of a first device and/or energy of the first device, and the first information is used to determine a channel access priority of the first device.

23. The method according to claim 22, wherein the first information is associated with an energy harvesting capability and/or an energy storage capability of the first device.

24. The method according to claim 22 or 23, wherein the first information comprises a first category, the first category is a category of one or more categories that are preset, and the one or more categories are associated with the power and/or the energy.

25. The method according to claim 24, wherein the one or more categories correspond to one or more channel access priorities.

26. The method according to claim 24 or 25, wherein the first category is determined based on second information, and the second information is associated with the power of the first device and/or the energy of the first device.

27. The method according to claim 26, wherein the second information comprises one or more of:
third information, associated with an energy harvesting capability of the first device;
fourth information, associated with an energy storage capability of the first device;
fifth information, associated with an energy harvesting mode of the first device; or
sixth information, associated with an energy harvesting frequency of the first device.

28. The method according to claim 27, wherein the third information comprises one or more pieces of following information:
seventh information, associated with a power source; or
eighth information, associated with energy harvesting efficiency.

29. The method according to claim 28, wherein the seventh information is used to indicate one or more of:
whether a plurality of types of power sources are supported;
whether a radio frequency power source is supported; or
whether a power source is stable.

30. The method according to any one of claims 27 to 29, wherein the fourth information comprises one or more of:
ninth information, indicating whether energy storage is supported;
tenth information, indicating an amount of stored energy; or
eleventh information, indicating an energy draining rate.

31. The method according to any one of claims 27 to 30, wherein the fifth information is used to indicate whether an energy harvesting mode jointing a plurality of power resources is supported.

32. The method according to any one of claims 27 to 31, wherein the sixth information is used to indicate one of:
whether energy harvesting in a plurality of frequency bands is supported; and
whether energy harvesting in a frequency band below 1 GHz is supported.

33. The method according to any one of claims 24 to 32, wherein the first category is determined based on one or more of:
pre-configuration information; or
configuration information from the second device.

34. The method according to claim 33, wherein in a case where the first category is determined based on the configuration information from the second device, the method further comprises:
receiving, by the second device, second information transmitted by the first device, wherein the second information is associated with the power of the first device and/or the energy of the first device, and the second information is used to determine the first category.

35. The method according to any one of claims 24 to 34, wherein the first category is a fixed category or a dynamically determined category.

36. The method according to any one of claims 24 to 35, wherein the first category is determined based on one or more pieces of following information:
information related to a channel access failure; or
harvesting circumstance of a power source of the first device.

37. The method according to any one of claims 24 to 36, wherein determining, by the second device, the first information comprises:
receiving, by the second device, the first category transmitted by the first device.

38. The method according to claim 37, wherein transmission of the first category is triggered actively by the first device or is triggered based on a request from the second device.

39. The method according to claim 37 or 38, wherein after the second device receives the first category transmitted by the first device, the method further comprises:
transmitting, by the second device, a second category to the first device; wherein the second category is a category of the one or more categories, and the second category is same as or different from the first category.

40. The method according to any one of claims 24 to 36, further comprising:
transmitting, by the second device, the first category to the second device.

41. The method according to any one of claims 22 to 40, wherein the first device is a station and the second device is an access point device.

42. A communication device, wherein the communication device is a first device, and the communication device comprises:
a determining module, configured to determine first information, wherein the first information is associated with power of the first device and/or energy of the first device, and the first information is used to determine a channel access priority of the first device.

43. The communication device according to claim 42, wherein the first information is associated with an energy harvesting capability and/or an energy storage capability of the first device.

44. The communication device according to claim 42 or 43, wherein the first information comprises a first category, the first category is a category of one or more categories that are preset, and the one or more categories are associated with the power and/or the energy.

45. The communication device according to claim 44, wherein the one or more categories correspond to one or more channel access priorities.

46. The communication device according to claim 44 or 45, wherein the first category is determined based on second information, and the second information is associated with the power of the first device and/or the energy of the first device.

47. The communication device according to claim 46, wherein the second information comprises one or more of:
third information, associated with an energy harvesting capability of the first device;
fourth information, associated with an energy storage capability of the first device;
fifth information, associated with an energy harvesting mode of the first device; or
sixth information, associated with an energy harvesting frequency of the first device.

48. The communication device according to claim 47, wherein the third information comprises one or more pieces of following information:
seventh information, associated with a power source; or
eighth information, associated with energy harvesting efficiency.

49. The communication device according to claim 48, wherein the seventh information is used to indicate one or more of:
whether a plurality of types of power sources are supported;
whether a radio frequency power source is supported; or
whether a power source is stable.

50. The communication device according to any one of claims 47 to 49, wherein the fourth information comprises one or more of:
ninth information, indicating whether energy storage is supported;
tenth information, indicating an amount of stored energy; or
eleventh information, indicating an energy draining rate.

51. The communication device according to any one of claims 47 to 50, wherein the fifth information is used to indicate whether an energy harvesting mode jointing a plurality of power resources is supported.

52. The communication device according to any one of claims 47 to 51, wherein the sixth information is used to indicate one of:
whether energy harvesting in a plurality of frequency bands is supported; and
whether energy harvesting in a frequency band below 1 GHz is supported.

53. The communication device according to any one of claims 44 to 52, wherein the first category is determined based on one or more of:
pre-configuration information; or
configuration information from a second device.

54. The communication device according to claim 53, wherein in a case where the first category is determined based on the configuration information from the second device, the communication device further comprises:
a first communication module, configured to transmit second information to the second device, wherein the second information is associated with the power of the first device and/or the energy of the first device, and the second information is used to determine the first category.

55. The communication device according to any one of claims 44 to 54, wherein the first category is a fixed category or a dynamically determined category.

56. The communication device according to any one of claims 44 to 55, wherein the first category is determined based on one or more pieces of following information:
information related to a channel access failure; or
harvesting circumstance of a power source of the first device.

57. The communication device according to any one of claims 44 to 56, further comprising:
a second communication module, configured to transmit the first category to a second device.

58. The communication device according to claim 57, wherein transmission of the first category is triggered actively by the first device or is triggered based on a request from the second device.

59. The communication device according to claim 57 or 58, further comprising:
a third communication module, configured to receive a second category transmitted by the second device after the first device transmits the first category to the second device; wherein the second category is a category of the one or more categories, and the second category is same as or different from the first category.

60. The communication device according to any one of claims 44 to 55, wherein the determining module is configured to receive the first category transmitted by a second device.

61. The communication device according to any one of claims 53 to 54 and 57 to 60, wherein the second device is an access point device.

62. The communication device according to any one of claims 42 to 61, wherein the first device is a station.

63. A communication device, wherein the communication device is a second device, and the communication device comprises:
a determining module, configured to determine first information, wherein the first information is associated with power of a first device and/or energy of the first device, and the first information is used to determine a channel access priority of the first device.

64. The communication device according to claim 63, wherein the first information is associated with an energy harvesting capability and/or an energy storage capability of the first device.

65. The communication device according to claim 63 or 64, wherein the first information comprises a first category, the first category is a category of one or more categories that are preset, and the one or more categories are associated with the power and/or the energy.

66. The communication device according to claim 65, wherein the one or more categories correspond to one or more channel access priorities.

67. The communication device according to claim 65 or 66, wherein the first category is determined based on second information, and the second information is associated with the power of the first device and/or the energy of the first device.

68. The communication device according to claim 67, wherein the second information comprises one or more of:
third information, associated with an energy harvesting capability of the first device;
fourth information, associated with an energy storage capability of the first device;
fifth information, associated with an energy harvesting mode of the first device; or
sixth information, associated with an energy harvesting frequency of the first device.

69. The communication device according to claim 68, wherein the third information comprises one or more pieces of following information:
seventh information, associated with a power source; or
eighth information, associated with energy harvesting efficiency.

70. The communication device according to claim 69, wherein the seventh information is used to indicate one or more of:
whether a plurality of types of power sources are supported;
whether a radio frequency power source is supported; or
whether a power source is stable.

71. The communication device according to any one of claims 68 to 70, wherein the fourth information comprises one or more of:
ninth information, indicating whether energy storage is supported;
tenth information, indicating an amount of stored energy; or
eleventh information, indicating an energy draining rate.

72. The communication device according to any one of claims 68 to 71, wherein the fifth information is used to indicate whether an energy harvesting mode jointing a plurality of power resources is supported.

73. The communication device according to any one of claims 68 to 72, wherein the sixth information is used to indicate one of:
whether energy harvesting in a plurality of frequency bands is supported; and
whether energy harvesting in a frequency band below 1 GHz is supported.

74. The communication device according to any one of claims 65 to 73, wherein the first category is determined based on one or more of:
pre-configuration information; or
configuration information from the second device.

75. The communication device according to claim 74, wherein in a case where the first category is determined based on the configuration information from the second device, the communication device further comprises:
a first communication module, configured to receive second information transmitted by the first device, wherein the second information is associated with the power of the first device and/or the energy of the first device, and the second information is used to determine the first category.

76. The communication device according to any one of claims 65 to 75, wherein the first category is a fixed category or a dynamically determined category.

77. The communication device according to any one of claims 65 to 76, wherein the first category is determined based on one or more pieces of following information:
information related to a channel access failure; or
harvesting circumstance of a power source of the first device.

78. The communication device according to any one of claims 65 to 77, wherein the determining module is configured to receive the first category transmitted by the first device.

79. The communication device according to claim 78, wherein transmission of the first category is triggered actively by the first device or is triggered based on a request from the second device.

80. The communication device according to claim 78 or 79, further comprising:
a second communication module, configured to transmit a second category to the first device after the second device receives the first category transmitted by the first device; wherein the second category is a category of the one or more categories, and the second category is same as or different from the first category.

81. The communication device according to any one of claims 65 to 77, further comprising:
a third communication module, configured to transmit the first category to the second device.

82. The communication device according to any one of claims 63 to 81, wherein the first device is a station and the second device is an access point device.

83. A communication device, comprising: a memory and a processor, wherein the memory is configured to store a program, and the processor is configured to call the program in the memory to enable the communication device to perform the method according to any one of claims 1 to 21 or any one of claims 22 to 41.

84. An apparatus, comprising: a processor configured to call a program from a memory to enable the apparatus to perform the method according to any one of claims 1 to 21 or any one of claims 22 to 41.

85. A chip, comprising: a processor, configured to call a program from a memory to enable a device equipped with the chip to perform the method according to any one of claims 1 to 21 or any one of claims 22 to 41.

86. A computer-readable storage medium, having stored a program thereon, wherein the program enables a computer to perform the method according to any one of claims 1 to 21 or any one of claims 22 to 41.

87. A computer program product, comprising: a program, wherein the program enables a computer to perform the method according to any one of claims 1 to 21 or any one of claims 22 to 41.

88. A computer program, wherein the computer program enables a computer to perform the method according to any one of claims 1 to 21 or any one of claims 22 to 41.
